# EUROPEAN PATENT SPECIFICATION

(11) **EP 3 102 801 B1**
(45) Date of publication and mention of the grant of the patent: **26.09.2018**
(21) Application number: 15705722.5
(22) Date of filing: 28.01.2015
(51) Int. Cl.: F01N 3/28, F02B 37/00, F01N 3/20

(54) **EXHAUST SYSTEM STRUCTURE FOR INTERNAL COMBUSTION ENGINE**
SYSTEMAUFBAU EINER ABGASNACHBEHANDLUG FÜR VERBRENNUNGSMOTOREN
STRUCTURE DE SYSTEME DES GAZ D'ECHAPPEMENT POUR DES MOTEURS A COMBUSTION INTERNE

(30) Priority: 31.01.2014 JP 2014017275
(43) Date of publication of application: 14.12.2016
(73) Proprietor: TOYOTA JIDOSHA KABUSHIKI KAISHA, Toyota-shi, Aichi-ken, 471-8571 (JP)
(72) Inventor: SATO, Masaaki, Toyota-shi Aichi 471-8571 (JP); ASAURA, Shinya, Toyota-shi Aichi 471-8571 (JP)
(74) Representative: Intès, Didier Gérard André
(86) International application number: PCT/JP2015/000358
(87) International publication number: WO 2015/115092

(56) References cited:
- EP-A1- 1 781 908
- EP-A2- 2 484 877
- WO-A1-2008/137028
- US-B2- 7 986 870

## Description

### [Technical Field]

The present invention relates to an exhaust system structure for an internal combustion engine, and more particularly to an exhaust system structure equipped with an addition device that adds aqueous urea solution or the like to exhaust gas.

### [Background Art]

There is a known exhaust system structure for an internal combustion engine having an SCR (Selective Catalytic Reduction) catalyst and an addition device used to add aqueous urea solution to the exhaust gas upstream of the SCR catalyst, both of which are attached to an exhaust pipe. In this exhaust system structure, there is a possibility that aqueous urea solution added by the addition device may adhere to the inner surface of the exhaust pipe.

In recent years particularly, the SCR catalyst tends to be arranged at an upstream location in the exhaust system for the purpose of improving the exhaust purifying rate of the SCR catalyst or due to limited installation space. In such arrangements, it is needed to add aqueous urea solution in a small space immediately upstream of the SCR catalyst. Consequently, the aqueous urea solution thus added by the addition device is likely to adhere to the inner surface of the exhaust pipe.

As water in the aqueous urea solution adhering to the inner surface of the exhaust pipe evaporates, urea is precipitated. When this occurs, if the temperature of the inner surface of the exhaust pipe is in a low temperature range around 140 degrees Celsius, the precipitated urea can be deposited on the inner surface. Even when the temperature of the inner surface is high, if a large quantity of aqueous urea solution is added by the addition device, the inner surface of the exhaust pipe is cooled by the aqueous urea solution, possibly leading to deposition of urea on the inner surface.

A known countermeasure to the above problem is to provide an electrically heated hot plate in the exhaust passage upstream of the SCR catalyst and to spray or drop aqueous urea solution onto the hot plate (see patent literature 1).

There is also known a reducing agent addition system adapted to inject aqueous urea solution into exhaust gas in the exhaust pipe by an addition valve arranged downstream of the turbine of the turbocharger and provided with an exhaust gas injection system adapted to inject exhaust gas upstream of the turbine into a space in the exhaust pipe to which injection by the addition valve is directed (see patent literature 2).

There is also known a system adapted to introduce intake air downstream of the compressor of the turbocharger into an evaporator provided in the exhaust manifold and to add reducing agent to the intake air (see patent literature 3).

There is also known a system adapted to supply reducing agent into a bypass passage that connects the exhaust passage upstream of the turbine of the turbocharger and the exhaust passage downstream of the turbine (see patent literature 4).

There is also known a system adapted to supply aqueous urea solution into the exhaust passage upstream of the turbine of the turbocharger (see patent literature 5).

EP2484877 (A2) discloses an exhaust system and, more particularly, an exhaust system having a thermally conductive dosing channel.

WO2008137028 (A1) describes a method for treating internal combustion engine exhaust to remove pollutants.

EP1781908 (A1) refers to an arrangement for supplying a urea solution to an exhaust line of a combustion engine.

From US2009107125 (A1) a device for providing a gaseous substance mixture which includes a reducing agent and/or a reducing agent precursor is known.

### [Citation List]

### [Patent Literature]

Patent Literature 1: Japanese Patent Application Laid-Open No. 2006-017043
Patent Literature 2: Japanese Patent Application Laid-Open No. 2013-160128
Patent Literature 3: Japanese Patent Application Laid-Open No. 2013-124555
Patent Literature 4: Japanese Patent Application Laid-Open No. 2013-007335
Patent Literature 5: Japanese Patent Application Laid-Open No. 2011-127471

### [Summary of Invention]

### [Technical Problem]

In the system described in patent literature 1, it is necessary to provide the hot plate and a driving unit for the hot plate additionally, possibly leading to complexity in the structure of the exhaust system and an increase in power consumption.

In the systems described in patent literatures 2 and 4, a decrease in the quantity of exhaust gas flowing into the turbine can lead to insufficiency in the supercharging effect of the turbocharger.

In the system described in patent literature 3, it is necessary to house the evaporator in the exhaust manifold, leading to an increase in the size of the exhaust manifold. Moreover, it is necessary to provide a passage for guiding intake air from the intake passage downstream of the compressor to the evaporator in the exhaust manifold, leading to complexity in piping. For this reason, a vehicle with small housing space may not employ this system.

In the system described in patent literature 5, it is necessary to provide an aqueous urea solution supply unit at a location upstream of the turbine. Consequently, the aqueous urea solution supply unit is exposed to high temperature, possibly leading to deterioration in the durability of the aqueous urea solution supply unit.

The present invention has been made in view of the above-described circumstances, and its object is to prevent or reduce deposition of urea by a simple measure in an exhaust system structure provided with an addition device that adds aqueous urea solution or the like to the exhaust gas.

### [Solution to Problem]

The present invention relates to an exhaust system structure according to claim 1 and claim 6.

In order to solve the above problems, in an exhaust system structure according to the present disclosure equipped with an addition device that adds aqueous urea solution or the like to exhaust gas, a portion on which aqueous urea solution added by the addition device impinges is heated utilizing thermal energy dissipated from a component of the exhaust system arranged upstream of a location at which the addition device is attached.

Specifically, according to the present disclosure, there is provided an exhaust system structure for an internal combustion engine comprising:
an exhaust pipe connected to the internal combustion engine; and
an addition device located midway in said exhaust pipe to add aqueous urea solution to exhaust gas flowing in said exhaust pipe,
wherein a portion of said exhaust pipe on which aqueous urea solution added by said addition device impinges is provided with a heat receiving part that receives heat dissipated from an outer wall of a component of the exhaust system arranged upstream of said portion.

In the above structure, the heat receiving part receives heat dissipated from the outer wall of the component of the exhaust system arranged upstream of the heat receiving part. Moreover, the portion of the exhaust pipe on which aqueous urea solution added by the addition device impinges is heated by the heat received by the heat receiving part.

The exhaust pipe receives heat of the exhaust gas flowing in the exhaust pipe and also receives heat transferred through the wall of the exhaust pipe from upstream portions of the exhaust pipe to downstream portions. The quantity of heat that the exhaust pipe receives from the exhaust gas is smaller in downstream portions with respect to the direction of flow of the exhaust gas than in the upstream portions. Moreover, since heat transferred through the wall of the exhaust pipe is partly dissipated from the outer wall of the exhaust pipe to the atmosphere, the amount of heat transferred through the wall of the exhaust pipe is smaller in downstream portion with respect to the direction of flow of the exhaust gas than in the upstream portions.

Therefore, the temperature of the wall of the exhaust pipe is lower in downstream portions with respect to the direction of flow of the exhaust gas than in upstream portions. In consequence, the amount of heat dissipated from the outer wall of a component of the exhaust system arranged upstream is larger than the amount of heat dissipated from the outer wall of a component of the exhaust system arranged downstream.

When the portion of the exhaust pipe on which aqueous urea solution impinges (which will be hereinafter referred to as the 'impingement portion') is provided with a heat receiving part, the impingement portion is heated by the heat that the heat receiving part has received from the upstream component of the exhaust system in addition to the heat received from the exhaust gas flowing in the exhaust pipe and the heat transferred through the wall of the exhaust pipe.

Consequently, the temperature of the impingement portion rises to prevent or reduce deposition of urea on the impingement portion. Even in cases where a large quantity of aqueous urea solution is added by the addition device, lowering of the temperature of the impingement portion is prevented or reduced, because the impingement portion is heated by the heat received by the heat receiving part. Therefore, even in cases where a large quantity of aqueous urea solution is added by the addition device, deposition of urea on the impingement portion can be prevented or reduced. Since the exhaust system structure according to the present disclosure utilizes waste heat dissipated from a component of the exhaust system arranged upstream, it is not necessary to provide an electric heater or the like additionally.

The heat receiving part in the present disclosure may be arranged to be in contact with the outer wall of the component of the exhaust system arranged upstream of the heat receiving part. Specifically, the exhaust pipe may be laid out in such a way that the heat receiving part is in contact with the upstream component of the exhaust system. In this case, since heat dissipated from the upstream component of the exhaust system is directly transferred to the heat receiving part, the temperature of the impingement portion can be raised more reliably. Furthermore, the components of the exhaust system can be laid out compactly. This provides another advantage that the system can be installed in the engine compartment of a vehicle with small installation space.

There may be cases where it is difficult to make the heat receiving part and the outer wall of the upstream component of the exhaust system in contact with each other due to limited installation space etc. In such cases, the heat receiving part and the outer wall of the upstream component of the exhaust system may be connected by a heat transferring member. In this case, heat of the upstream component of the exhaust system is transferred to the heat receiving part through the heat transferring member.

In the present disclosure, the component of the exhaust system arranged upstream of said heat receiving part may be the exhaust manifold or the turbine housing of the turbocharger. Since the exhaust manifold is arranged immediately downstream of the internal combustion engine, the exhaust manifold dissipates the largest amount of heat. Since the turbine housing is arranged immediately downstream of the exhaust manifold, the turbine housing also dissipates a large amount of heat. Therefore, if the heat receiving part receives heat dissipated from the exhaust manifold or the turbine housing, the heat receiving part can receive a large amount of heat and can raise the temperature of the impingement portion.

According to the present disclosure, in an exhaust system structure for an internal combustion engine comprising an exhaust pipe connected to the internal combustion engine and an addition device located midway in said exhaust pipe to add aqueous urea solution to exhaust gas flowing in said exhaust pipe, a portion of said exhaust pipe on which aqueous urea solution added by said addition device impinges may be provided with a heat accumulating part having a heat capacity larger than the other portion.

In this structure, the portion of the exhaust pipe on which aqueous urea solution added by the addition device impinges (impingement portion) has a heat capacity larger than the other portion. This makes a decrease in the temperature of the impingement portion smaller when aqueous urea solution impinges on the impingement portion. In consequence, even if a large quantity of aqueous urea solution is added by the addition device, a decrease in the temperature of the impingement portion is small, and urea is unlikely to be deposited on the impingement portion.

If the heat capacity of the impingement portion is large, there may be a fear that it is difficult to raise the temperature of the impingement portion when, for example, the internal combustion engine is cold started. However, aqueous urea solution is not added by the addition device when an exhaust gas purification apparatus (e.g. an SCR (selective catalytic reduction) catalyst) arranged downstream of the impingement portion has not become active. At the time when the SCR catalyst becomes active, the temperature of the impingement portion has already become sufficiently high, and urea is unlikely to be deposited on the impingement portion at the time when addition of aqueous urea solution through the addition device is started.

A method of making the heat capacity of the impingement portion large may be making the thickness of the exhaust pipe larger in the impingement portion than in the other portion or using in the impingement portion a material having a heat capacity larger than the material of which the other portion is made.

### Advantageous Effects of Invention

According to the present invention, deposition of urea can be prevented or reduced by a simple measure in an exhaust system structure provided with an addition device that adds aqueous urea solution or the like to the exhaust gas.

### Brief Description of Drawings

[fig.1]Fig. 1 is a diagram showing an exhaust system structure for an internal combustion engine according to a first embodiment.
[fig.2]Fig. 2 is a diagram showing a modification of the exhaust system structure for an internal combustion engine according to the first embodiment.
[fig.3]Fig. 3 is a diagram showing a modification of the exhaust system structure for an internal combustion engine according to the first embodiment.
[fig.4]Fig. 4 is a diagram showing a modification of the exhaust system structure for an internal combustion engine according to the first embodiment.
[fig.5]Fig. 5 is a diagram showing a modification of the exhaust system structure for an internal combustion engine according to the first embodiment.
[fig.6]Fig. 6 is a diagram showing a modification of the exhaust system structure for an internal combustion engine according to the first embodiment.
[fig.7]Fig. 7 is a diagram showing an exhaust system structure for an internal combustion engine according to a second embodiment.
[fig.8]Fig. 8 is a graph showing a relationship between the quantity of aqueous urea solution injected through an addition valve and the temperature of the wall surface of the impingement portion.
[fig.9]Fig. 9 is a diagram showing a modification of the exhaust system structure for an internal combustion engine according to the second embodiment.

### Description of Embodiments

In the following, specific embodiments of the present invention will be described with reference to the drawings. The dimensions, materials, shapes, relative arrangements, and other features of the components that will be described in connection with the embodiments are not intended to limit the technical scope of the present invention only to them, unless particularly stated.

### <Embodiment 1>

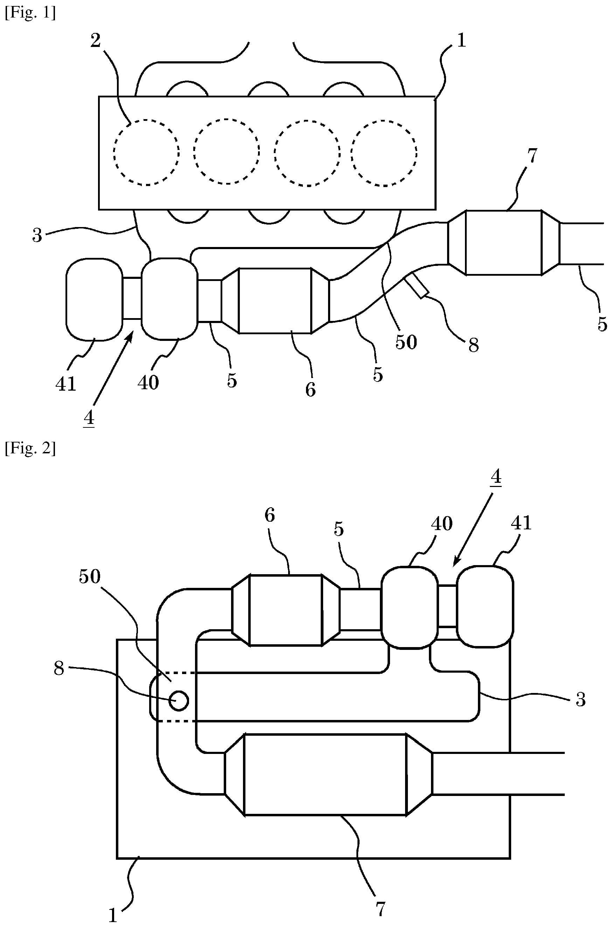

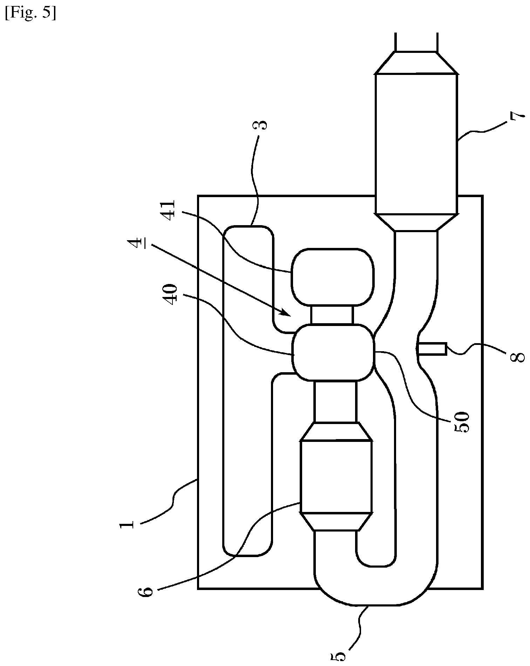

Firstly, a first embodiment of the present invention will be described with reference to Figs. 1 to 6. Fig. 1 is a diagram showing an exhaust system structure for an internal combustion engine according to the present invention.

The internal combustion engine 1 shown in Fig. 1 is a compression-ignition internal combustion engine (diesel engine) having a plurality of cylinders. The internal combustion engine 1 may be a spark-ignition internal combustion engine (gasoline engine) run in a lean burn condition.

The internal combustion engine 1 is connected with an exhaust manifold 3. The exhaust manifold 3 includes a plurality of branch pipes through which burned gas (exhaust gas) discharged from the cylinders 2 of the internal combustion engine 1 and a merging portion into which the branch pipe merge.

The merging portion of the exhaust manifold 3 is connected to the inlet of a turbine housing 40, which is a component of a turbocharger 4. The outlet of the turbine housing 40 is connected to an exhaust pipe 5. A first catalyst casing 6 is located midway in the exhaust pipe 5.

The first catalyst casing 6 is a cylindrical casing, in which a particulate filter and an oxidation catalyst are housed. The oxidation catalyst may be either arranged upstream of the particulate filter or supported on the particulate filter. What is housed in the first catalyst casing 6 may be a three-way catalyst or storage reduction catalyst instead of the oxidation catalyst.

The exhaust pipe 5 downstream of the first catalyst casing 6 is provided with a second catalyst casing 7. The second catalyst casing 7 is a cylindrical casing, in which a selective catalytic reduction catalyst (SCR catalyst), an oxidation catalyst or the like is housed. What is housed in the second catalyst casing 7 may be a particulate filter on which an SCR catalyst is supported. In this case, an oxidation catalyst may be provided in the first casing 6. Alternatively, the first catalyst casing 6 may be eliminated, and an oxidation catalyst may be provided in the second catalyst casing 7.

An addition valve 8 is attached to the exhaust pipe 5 between the first catalyst casing 6 and the second catalyst casing 7. The addition valve 8 is a valve unit used to add aqueous urea solution to the exhaust gas flowing in the exhaust pipe 5 and corresponds to the addition device according to the present invention. Addition of aqueous urea solution by the addition valve 8 is controlled by an electronic control unit (ECU) not shown.

In the exhaust system structure for the internal combustion engine 1 as described above, aqueous urea solution added to the exhaust gas through the addition valve 8 flows into the second catalyst casing 7 with the exhaust gas. Then, the aqueous urea solution receives heat from the exhaust gas to be decomposed, or the aqueous urea solution is hydrolyzed by the SCR catalyst in the second catalyst casing 7. Heat decomposition or hydrolysis of aqueous urea solution generates ammonia (NH₃). The NH ₃ thus generated is adsorbed or stored by the SCR catalyst. The NH₃ adsorbed or stored in the SCR catalyst reacts with nitrogen oxides (NOₓ) contained in the exhaust gas to generate nitrogen (N₂) and water (H₂O). Thus, NH₃ acts as a reducing agent for NOₓ.

There is a possibility that the aqueous urea solution added by the addition valve 8 may adhere to the inner surface of the exhaust pipe 5. Then, as water component in the aqueous urea solution evaporates, urea is precipitated. The urea precipitated from the aqueous urea solution is removed from the inner surface of the exhaust pipe 5 when it is exposed to high temperatures in the range of approximately 200 degrees Celsius to 300 degrees Celsius. However, when the wall surface of the exhaust pipe 5 is at a low temperature of approximately 140 degrees Celsius, there is a possibility that the urea precipitated from the aqueous urea solution may be deposited on the inner surface of the exhaust pipe 5.

As a countermeasure to this, as shown in Fig. 1, the exhaust system structure for the internal combustion engine according to this embodiment is provided with a heat receiving part 50 provided on the portion of the exhaust pipe 5 on which aqueous urea solution added (or injected) through the addition valve 8 impinges (impingement portion). The heat receiving part 50 receives heat dissipated from the outer wall of a component of the exhaust system upstream of the aforementioned portion. Specifically, the exhaust pipe 5 is laid out in such a way that the outer wall of the impingement portion of the exhaust pipe 5 is in contact with the outer wall of the exhaust manifold 3. Moreover, the addition valve 8 is attached to the exhaust pipe 5 in such a way that aqueous urea solution is injected toward the inner surface of the portion of the exhaust pipe 5 that is in contact with the outer wall of the exhaust manifold 3.

The exhaust pipe 5 receives heat of the exhaust gas flowing in the exhaust pipe 5 and also receives heat transferred from upstream portions to downstream portions of the exhaust pipe 5 through the wall of the exhaust pipe 5. The amount of heat that the exhaust pipe 5 receives from the exhaust gas is larger in upstream portions with respect to the flow of the exhaust gas than in downstream portions. Since the heat transferred through the wall of the exhaust pipe 5 is partly dissipated to the atmosphere from the outer wall of the exhaust pipe 5, the amount of heat transferred through the wall of the exhaust pipe 5 is larger in upstream portions with respect to the flow of the exhaust gas than in the downstream portions.

Therefore, the temperature of the wall of the exhaust pipe 5 is higher in upstream portions with respect to the flow of the exhaust gas than in downstream portions. Consequently, the amount of heat dissipated from the outer wall of a component of the exhaust system arranged upstream is larger than the amount of heat dissipated from the outer wall of a component of the exhaust system arranged downstream. In particular, the exhaust manifold 3, which is arranged most upstream in the exhaust system of the internal combustion engine 1, receives the heat of the internal combustion engine 1 in addition to the heat of the exhaust gas. Consequently, the temperature of the exhaust manifold 3 is significantly higher than the temperature of the aforementioned impingiment portion.

If the heat receiving part 50 is provided on the aforementioned impingement portion, the impingement portion is heated by the heat received by the heat receiving part from the exhaust manifold 3 in addition to the heat receives from the exhaust gas flowing in the exhaust pipe 5 and the heat transferred through the wall of the exhaust pipe 5.

Consequently, the temperature of the impingement portion is raised, so that deposition of urea on the impingement portion is prevented. Moreover, even in cases where a large quantity of aqueous urea solution is added by the addition valve 8, lowering of the temperature of the impingement portion is prevented, because the impingement portion is heated by the heat received by the heat receiving part 50. Therefore, even in cases where a large quantity of aqueous urea solution is added by the addition valve 8, deposition of urea on the impingement portion is prevented.

In the exhaust system structure for the internal combustion engine of this embodiment as described above, since the impingement portion is heated utilizing waste heat dissipated from a component of the exhaust system arranged upstream of the impingement portion, it is not necessary to provide an electric heater or the like, and deposition of urea can be prevented by a simple structure.

In the illustrative case shown in Fig. 1 described above, the first catalyst casing 6 and the second catalyst casing 7 are arranged in such a way that the direction of flow of the exhaust gas in the first catalyst casing 6 and the direction of flow of the exhaust gas in the second catalyst casing 7 are the same. However, the exhaust system structure for an internal combustion engine according to the present invention is not limited to the arrangement shown in Fig. 1.

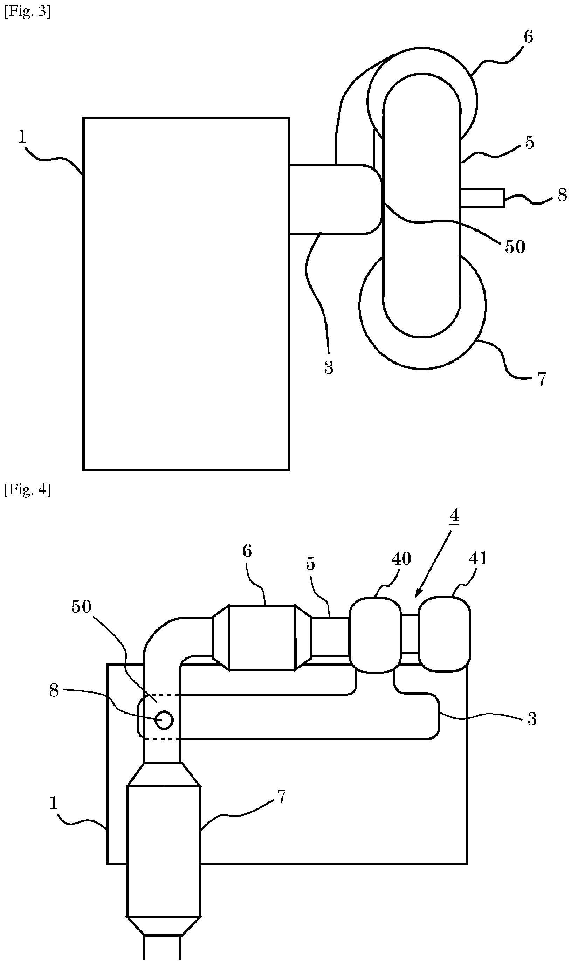

For example, as shown in Figs. 2 and 3, in a structure in which the exhaust gas flowing out of the first catalyst casing 6 flows into the second catalyst casing 7 after turning its direction of flow 180 degrees also, a portion of the outer wall of the exhaust pipe 5 located between the first catalyst casing 6 and the second catalyst casing 7 may be arranged to be in contact with the outer wall of the exhaust manifold 3, and the addition valve 8 may be attached to the exhaust pipe 5 in such a way that it injects aqueous urea solution toward the inner surface of the exhaust pipe 5 at this contact portion.

Furthermore, as shown in Fig. 4, in a structure in which the exhaust gas flowing out of the first catalyst casing 6 flows into the second catalyst casing 7 after turning its direction of flow 90 degrees, a portion of the outer wall of the exhaust pipe 5 located between the first catalyst casing 6 and the second catalyst casing 7 may be arranged to be in contact with the outer wall of the exhaust manifold 3, and the addition valve 8 may be attached to the exhaust pipe 5 in such a way that it injects aqueous urea solution toward the inner surface of the exhaust pipe 5 at this contact portion.

If it is difficult due to limited installation space or other reasons to make the outer wall of the exhaust pipe 5 and the outer wall of the exhaust manifold 3 in contact with each other, a portion of the outer wall of the exhaust pipe 5 located between the first catalyst casing 6 and the second catalyst casing 7 may be made in contact with the outer wall of the turbine housing 40, and the addition valve 8 may be attached to the exhaust pipe 5 in such a way that it injects aqueous urea solution toward the inner surface of the exhaust pipe 5 at this contact portion.

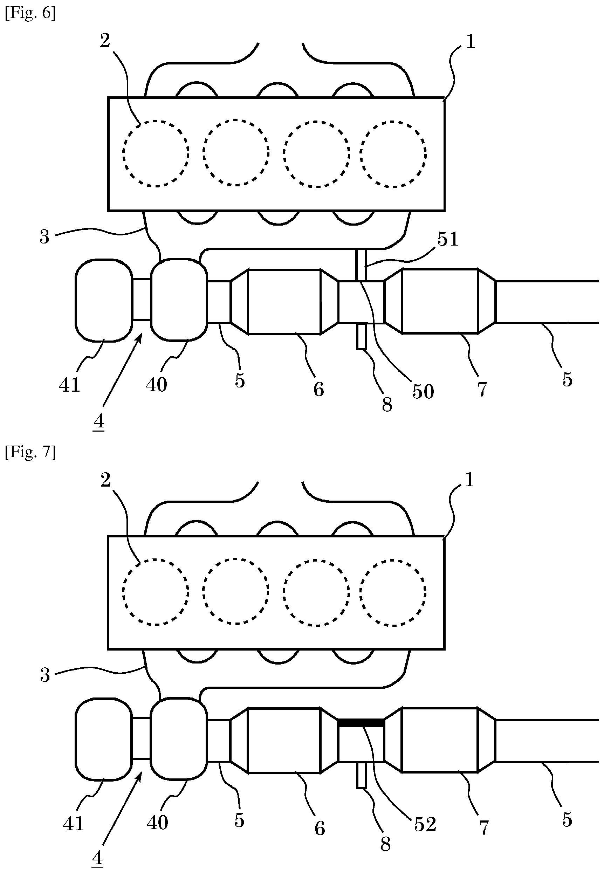

Alternatively, as shown in Fig. 6, a portion of the outer wall of the exhaust pipe 5 located between the first catalyst casing 6 and the second catalyst casing 7 and the outer wall of the exhaust manifold 3 may be connected or bridged by a support member (or stay) 51 made of a material having high thermal conductivity, and the addition valve 8 may be attached to the exhaust pipe 5 in such a way that it injects aqueous urea solution toward the inner surface of the exhaust pipe 5 at this connected portion. The aforementioned support member 51 may connect a portion of the outer wall of the exhaust pipe 5 located between the first catalyst casing 6 and the second catalyst casing 7 and the outer wall of the turbine housing 40. What is essential to the member connecting a portion of the outer wall of the exhaust pipe 5 located between the first catalyst casing 6 and the second catalyst casing 7 and the outer wall of the exhaust manifold 3 (or turbine housing 40) is that it has the function of transferring heat, and it is not necessary for it to have the supporting function.

With the above-described various structures, the temperature of the impingement portion can be raised utilizing waste heat dissipated from the outer wall of a component of the exhaust system (such as the exhaust manifold 3 and the turning housing 40) arranged upstream of the impingement portion. Consequently, deposition of urea on the impingement portion can be or prevented from occurring without providing an electric heater or the like additionally.

### <Embodiment 2>

Next, a second embodiment of the present invention will be described with reference to Figs. 7 to 9. In the following, features different from those in the first embodiment will be described, and like features will not be described.

In the first embodiment, a case in which a heat receiving part is provided on a portion of the exhaust pipe 5 on which aqueous urea solution injected through the addition valve 8 impinges (impingement portion) has been described. In this embodiment a case in which a heat accumulating part is provided on the impingement portion will be described.

Fig. 7 is a diagram showing an exhaust system structure for an internal combustion engine in this embodiment. In Fig. 7, components the same as those in the above-described first embodiment are denoted by the same reference symbols. In the exhaust system structure shown in Fig. 7, a heat accumulating part 52 is provided on a portion of the exhaust pipe 5 on which aqueous urea solution injected through the addition valve 8 impinges.

The heat accumulating part 52 is adapted to have a heat capacity larger than the other portion of the exhaust pipe 5. Specifically, the wall thickness of the exhaust pipe 5 is larger in the heat accumulating part 52 than in the other portion. Alternatively, the heat accumulating part 52 is made of a material having a heat capacity larger than the material of which the exhaust pipe 5 is made.

If a relatively large quantity of aqueous urea solution is injected through the addition valve 8, the quantity of aqueous urea solution impinging on the impingement portion becomes large. As the quantity of aqueous urea solution impinging on the impingement portion increases, the quantity of heat transferred from the impingement portion to aqueous urea solution increases, leading to a decrease in the temperature of the impingement portion.

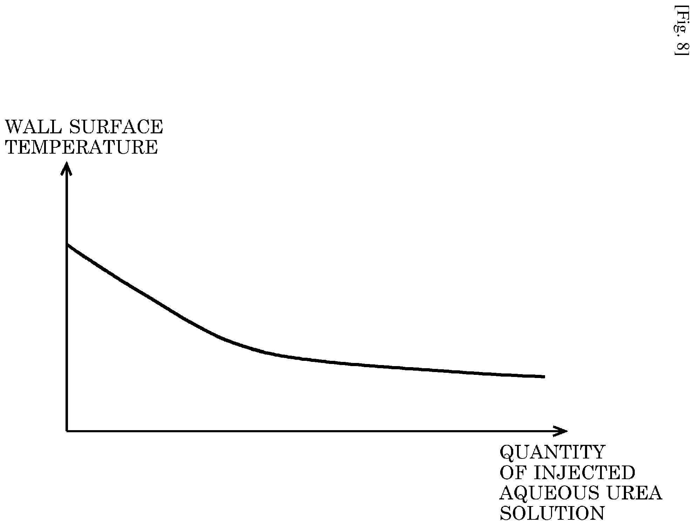

Fig. 8 is a graph showing a relationship between the quantity of aqueous urea solution injected through the addition valve 8 and the temperature of the wall surface of the impingement portion. As shown in Fig. 8, as the quantity of aqueous urea solution injected through the addition valve 8 increases, the temperature of the wall surface of the impingement portion tends to lower. Therefore, when the quantity of aqueous urea solution injected through the addition valve 8 becomes large, there is a possibility that the temperature of the wall surface of the impingement portion may lower to a temperature range in which urea precipitated from aqueous urea solution cannot be removed fully.

As a countermeasure to this, the exhaust system structure for the internal combustion engine of this embodiment is provided with the heat accumulating part 52 on the impingement portion, by which the temperature of the wall surface of the impingement portion is prevented from lowering greatly, even when a large quantity of aqueous urea solution impinges on the impingement portion. Consequently, it is possible to prevent precipitation of urea from aqueous urea solution and deposition of precipitated urea on the impingement portion.

There may be a fear that the heat accumulating part 52 provided on the impingement portion makes it difficult to raise the temperature of the impingement portion when, for example, the internal combustion engine 1 is cold started. However, aqueous urea solution is not injected through the addition valve 8 until the SCR catalyst arranged downstream of the impingement portion becomes active. At the time when the SCR catalyst becomes active, the temperature of the impingement portion has already become sufficiently high, and urea is unlikely to be deposited on the impingement portion at the time when addition of aqueous urea solution through the addition valve 8 is started.

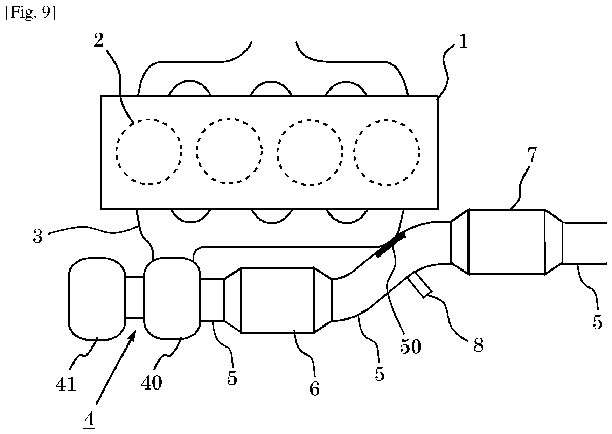

The heat receiving part in the first embodiment and the heat accumulating part in this embodiment may be employed in combination. For example, as shown in Fig. 9, the system may be arranged in such a way that the outer wall of the portion of the exhaust pipe 5 on which aqueous urea solution injected through the addition valve 8 impinges is arranged to be in contact with the outer wall of the exhaust manifold 3 and that the heat capacity of the exhaust pipe 5 is larger in the contact portion than in the other portion. If this is the case, a fall of the temperature of the impingement portion with a large quantity of injection of aqueous urea solution through the addition valve 8 can be made smaller. Consequently, deposition of urea on the impingement portion can be prevented more reliably.

### Reference Signs List

- 1: internal combustion engine
- 2: cylinder
- 3: exhaust manifold
- 4: turbocharger
- 5: exhaust pipe
- 6: first catalyst casing
- 7: second catalyst casing
- 8: addition valve
- 40: turbine housing
- 50: heat receiving part
- 52: heat accumulating part

## Claims

1. An exhaust system structure for an internal combustion engine (1) comprising:
an exhaust pipe (5) configured to be connected to the internal combustion engine (1); and
an addition device (8) located midway in said exhaust pipe (5) to add aqueous urea solution to exhaust gas flowing in said exhaust pipe (5),
**characterized in that** a portion of said exhaust pipe (5) on which aqueous urea solution added by said addition device (8) impinges is provided with a heat receiving part (50) that is in contact with an outer wall of a component (3, 40) of the exhaust system arranged upstream of said heat receiving part (50) and that is configured to receive heat dissipated from the outer wall of said component (3, 40) of the exhaust system arranged upstream of said portion in addition to heat received from exhaust gas flowing in the exhaust pipe (5) and heat transferred through the wall of the exhaust pipe (5).

2. An exhaust system structure for an internal combustion engine according to claim 1, **characterized in that** said heat receiving part (50) is connected with the outer wall of the component (3) of the exhaust system arranged upstream of said heat receiving part (50) by a heat transferring member (51).

3. An exhaust system structure for an internal combustion engine according to claim 1 or 2, **characterized in that** the component of the exhaust system arranged upstream of said heat receiving part (50) is an exhaust manifold (3).

4. An exhaust system structure for an internal combustion engine according to claim 1 or 2, **characterized in that** the component of the exhaust system arranged upstream of said heat receiving part is a turbine housing (40) of a turbocharger (4).

5. An exhaust system structure for an internal combustion engine comprising:
an exhaust pipe (5) configured to be connected to the internal combustion engine (1); and
an addition device (8) located midway in said exhaust pipe (5) to add aqueous urea solution to exhaust gas flowing in said exhaust pipe (5),
**characterized in that** a portion of said exhaust pipe (5) on which aqueous urea solution added by said addition device impinges is provided with a heat accumulating part (52) having a heat capacity larger than the other portion.

## Patentansprüche

1. Abgasanlagenstruktur für einen Verbrennungsmotor (1), umfassend:
ein Abgasrohr (5), das dafür konfiguriert ist, mit dem Verbrennungsmotor (1) verbunden zu werden, und
eine Zugabevorrichtung (8), die in der Mitte des Abgasrohres (5) angeordnet ist, um wässrige Harnstofflösung zu einem Abgas zu geben, das in dem Abgasrohr (5) strömt,
**dadurch gekennzeichnet, dass** ein Abschnitt des Abgasrohres (5), auf den wässrige Harnstofflösung, die durch die Zugabevorrichtung (8) zugegeben wurde, auftrifft, mit einem Wärmeempfangsteil (50) versehen ist, das mit einer Außenwand einer Komponente (3, 40) der Abgasanlage in Kontakt steht, die stromaufwärts des Wärmeempfangsteils (50) angeordnet ist, und dafür konfiguriert ist, Wärme, die von der Außenwand der Komponente (3, 40) der Abgasanlage, die stromaufwärts des Abschnitts angeordnet ist, dissipiert wird, zusätzlich zu Wärme, die von Abgas empfangen wird, das in dem Abgasrohr (5) strömt, und Wärme, die durch die Wand des Abgasrohres (5) übertragen wird, zu empfangen.

2. Abgasanlagenstruktur für einen Verbrennungsmotor nach Anspruch 1, **dadurch gekennzeichnet, dass** der Wärmeempfangsteil (50) mit der Außenwand der Komponente (3) der Abgasanlage, die stromaufwärts des Wärmeempfangsteils (50) angeordnet ist, durch ein Wärmeübertragungselement (51) verbunden ist.

3. Abgasanlagenstruktur für einen Verbrennungsmotor nach Anspruch 1 oder 2, **dadurch gekennzeichnet, dass** die Komponente der Abgasanlage, die stromaufwärts des Wärmeempfangsteils (50) angeordnet ist, ein Abgaskrümmer (3) ist.

4. Abgasanlagenstruktur für einen Verbrennungsmotor nach Anspruch 1 oder 2, **dadurch gekennzeichnet, dass** die Komponente der Abgasanlage, die stromaufwärts des Wärmeempfangsteils angeordnet ist, ein Turbinengehäuse (40) eines Turboladers (4) ist.

5. Abgasanlagenstruktur für einen Verbrennungsmotor, umfassend:
ein Abgasrohr (5), das dafür konfiguriert ist, mit dem Verbrennungsmotor (1) verbunden zu werden, und
eine Zugabevorrichtung (8), die in der Mitte des Abgasrohres (5) angeordnet ist, um wässrige Harnstofflösung zu einem Abgas zu geben, das in dem Abgasrohr (5) strömt,
**dadurch gekennzeichnet, dass** ein Abschnitt des Abgasrohres (5), auf den wässrige Harnstofflösung, die durch die Zugabevorrichtung zugegeben wurde, auftrifft, mit einem Wärmeakkumulationsteil (52) versehen ist, dessen Wärmekapazität größer ist als die des anderen Abschnitts.

## Revendications

1. Structure de système d'échappement pour un moteur à combustion interne (1) comportant :
un tube d'échappement (5) configuré pour être relié au moteur à combustion interne (1) ; et
un dispositif d'addition (8) situé à mi-chemin dans ledit tube d'échappement (5) pour ajouter une solution aqueuse d'urée au gaz d'échappement qui s'écoule dans ledit tube d'échappement (5),
**caractérisé en ce qu'**une partie dudit tube d'échappement (5) sur laquelle la solution aqueuse d'urée ajoutée par ledit dispositif d'addition (8) frappe est pourvue d'une partie de réception de chaleur (50) qui est en contact avec une paroi extérieure d'un composant (3, 40) du système d'échappement disposé en amont de ladite partie de réception de chaleur (50) et qui est configurée pour recevoir de la chaleur dissipée par la paroi extérieure dudit composant (3, 40) du système d'échappement disposé en amont de ladite partie en plus de la chaleur reçue du gaz d'échappement qui s'écoule dans le tube d'échappement (5) et de la chaleur transférée à travers la paroi du tube d'échappement (5).

2. Structure de système d'échappement pour un moteur à combustion interne selon la revendication 1, **caractérisée en ce que** ladite partie de réception de chaleur (50) est reliée à la paroi extérieure du composant (3) du système d'échappement disposé en amont de ladite partie de réception de chaleur (50) par un élément de transfert de chaleur (51).

3. Structure de système d'échappement pour un moteur à combustion interne selon la revendication 1 ou 2, **caractérisée en ce que** le composant du dispositif d'échappement disposé en amont de ladite partie de réception de chaleur (50) est un collecteur d'échappement (3) .

4. Structure de système d'échappement pour un moteur à combustion interne selon la revendication 1 ou 2, **caractérisée en ce que** le composant du dispositif d'échappement disposé en amont de ladite partie de réception de chaleur est un carter de turbine (40) d'un turbocompresseur (4).

5. Structure de système d'échappement pour un moteur à combustion interne comportant :
un tube d'échappement (5) configuré pour être relié au moteur à combustion interne (1) ; et
un dispositif d'addition (8) situé à mi-chemin dans ledit tube d'échappement (5) pour ajouter une solution aqueuse d'urée au gaz d'échappement qui s'écoule dans ledit tube d'échappement (5),
**caractérisée en ce qu'**une partie dudit tube d'échappement (5) sur laquelle la solution aqueuse d'urée ajoutée par ledit dispositif d'addition frappe est pourvue d'une partie d'accumulation de chaleur (52) ayant une capacité thermique plus grande que l'autre partie.
